# EUROPEAN PATENT APPLICATION

(11) **EP 3 695 762 A1**
(43) Date of publication of application: **19.08.2020**
(21) Application number: 20156587.6
(22) Date of filing: 11.02.2020
(51) Int. Cl.: A47J 42/14, A47J 42/24, A47J 42/34

(54) **GRINDER FOR PROCESSING PLANT MATERIAL**

(30) Priority: 14.02.2019 US 201962805353 P
(71) Applicant: Canopy Growth Corporation, Smith Falls, Ontario K7A 0A8 (CA)
(72) Inventor: WYPORSKI, Wojtek, OTTAWA, K2M 0G2 (CA)
(74) Representative: Murgitroyd & Company

(57) **Abstract**

A grinder having a lid and a container. The container has an interior surface defining a cavity, and at least one container tooth extending outward from the interior surface into the cavity. The container tooth extends across at least a portion of the interior surface from adjacent a center portion of the interior surface to adjacent a peripheral edge of the interior surface. The lid has a lower surface that is configured to be at least partially received within the cavity. The lid includes at least one lid tooth that extends outward from the lower surface. The lid tooth extends across at least a portion of the lower surface from adjacent a center portion of the lower surface to adjacent a peripheral edge of the lower surface.

## Description

This application is based on and claims priority to U.S. Provisional Application Serial No. 62/805,353, filed on February 14, 2019.

### BACKGROUND OF THE INVENTION

### 1. FIELD OF THE INVENTION

The present invention relates generally to herbal milling systems and methods and, more specifically, to a grinder for processing plant material such as cannabis.

### 2. DESCRIPTION OF RELATED ART

The use of cannabis for medicinal and recreational purposes has increased in recent years. A cannabis plant includes flowering parts, also called buds, which comprise the parts that are the richest in cannabinoids. Such flower parts are often processed in a grinder by a user to create finer cannabis particles than may be received from a medical dispensary or retail location. The creation of finer particles may create more surface area on the cannabis resulting in a better experience for the user.

The grinder may include a container having a cavity for receiving the flowering parts and a lid which is configured (e.g., shaped and dimensioned) such that a portion of the lid is receivable in the cavity while the flowering parts are therein. The lid may include downward projections to contact the flowering parts when received in the cavity. The user may rotate the lid while received in the cavity to grind the flowering parts to create finer cannabis particles.

Such grinders are often traditional vertical tooth, two-piece designs which may not be optimal in grinding cannabis flower stems as some of the flowering parts may not be adequately ground up and may remain on interior surfaces of the lid and container. Any residue on the lid or container may cause crystal build-up to form around interfacing edges between the lid and container, which may decrease the ease of long term use.

### BRIEF SUMMARY OF THE INVENTION

A grinder in accordance with one aspect of the invention described herein includes a container and a lid. The container has at least one interior surface defining a cavity, The container further includes at least one container tooth that extends outward from the at least one interior surface into the cavity. The at least one container tooth extends across at least a portion of the at least one interior surface from adjacent a center portion of the at least one interior surface to adjacent a peripheral edge of the at least one interior surface. The lid has a lower surface that is configured to be at least partially received within the cavity. The lid includes at least one lid tooth that extends outward from the lower surface. The at least one lid tooth extends across at least a portion of the lower surface from adjacent a center portion of the lower surface to adjacent a peripheral edge of the lower surface. The configuration of the lid and container may separate cannabis stems from cannabis flowering parts in a better manner than conventional grinders. Further, the configuration of the grinder may also minimize the amount of residue that accumulates on the teeth during grinding.

The at least one interior surface of the container may include a concave surface. The at least one interior surface of the container may include a bottom surface and a side surface, wherein a center portion of the bottom surface is the center portion of the at least one interior surface, and a peripheral edge of the side surface is the peripheral edge of the at least one interior surface. The at least one interior surface may include a curved surface positioned between the bottom surface and the side surface. The at least one container tooth may extend across the bottom surface from the center portion of the bottom surface to the curved surface, wherein the at least one container tooth further extends across the curved surface to the side surface and across the side surface to the peripheral edge of the side surface.

The grinder may have a plurality of container teeth each extending outward from the at least one interior surface into the cavity, wherein each of the container teeth extends across at least a portion of the at least one interior surface from adjacent the center portion of the at least one interior surface to adjacent the peripheral edge of the at least one interior surface. Each of the container teeth may extend in a generally linear manner from adjacent the center portion of the at least one interior surface to adjacent the peripheral edge of the at least one interior surface. Each of the container teeth may extend radially from adjacent the center portion of the at least one interior surface to adjacent the peripheral edge of the at least one interior surface. Alternatively, each of the container teeth may extend in a generally curvilinear manner from adjacent the center portion of the at least one interior surface to adjacent the peripheral edge of the at least one interior surface.

The lid may include an upper portion and a protrusion extending downwardly from the upper portion, wherein the protrusion includes the lower surface, and wherein the protrusion is configured to be at least partially received within the cavity. The protrusion may include at least one side wall extending between the upper portion and the lower surface. The at least one lid tooth may extend from the peripheral edge of the lower surface across at least a portion of the side wall. The upper portion may have an outer surface that is configured for grasping by a user. The lid may include a plurality of lid teeth each extending outward from the lower surface, wherein each of the lid teeth extends across at least a portion of the lower surface from adjacent a center portion of the lower surface to adjacent a peripheral edge of the lower surface.

The grinder may further include a pin that extends outward from one of the at least one interior surface of the container and the lower surface of the lid, wherein the pin is configured to be received by a recess formed in the other of the at least one interior surface of the container and the lower surface of the lid. The grinder may include a spacer with an opening that is configured to receive the pin.

A magnet may be positioned on one of the lid and the container, the magnet configured for engaging another magnet or a ferromagnetic material on the other of the lid and the container.

The at least one container tooth may have a pair of side surfaces each extending outward from the at least one interior surface, and wherein the at least one container tooth comprises a top surface that extends between the side surfaces, the top surface being spaced apart from the at least one interior surface.

Additional aspects of the invention, together with the advantages and novel features appurtenant thereto, will be set forth in part in the description which follows, and in part will become apparent to those skilled in the art upon examination of the following, or may be learned from the practice of the invention. The objects and advantages of the invention may be realized and attained by means of the instrumentalities and combinations particularly pointed out in the appended claims.

### BRIEF DESCRIPTION OF THE DRAWINGS

The subject matter of the invention will be readily understood from the following detailed description of aspects of the invention taken in conjunction with the accompanying drawings in which:
FIG. 1 is a perspective exploded view of a grinder in accordance with the invention described herein;
FIG. 2 is a perspective view of a lid of the grinder of FIG. 1;
FIG. 3 is a perspective view of a container of the grinder of FIG. 1;
FIG. 4 is a perspective exploded view of the grinder of FIG. 1 further including a spacer and alignment pin;
FIG. 5 is a perspective exploded view of another embodiment of a grinder including a lid, container, pin and spacer;
FIG. 6 is a bottom plan view of the lid of the grinder of FIG. 5;
FIG. 7 is a top plan view of the container of the grinder of FIG. 5;
FIGS. 8A-C are side cross-sectional views of various tooth shapes that may be used in the lids and containers of the grinders shown in FIGS. 1-7; and
FIGS. 9A-C depict various tooth patterns that may be used in the lids and containers of the grinders shown in FIGS. 1-7.

### DETAILED DESCRIPTION OF PREFERRED EMBODIMENT

The invention is directed to a grinder that is configured to reduce the size of, and separate, plant material. While the invention will be described in detail below with reference to various exemplary embodiments, it should be understood that the invention is not limited to the specific configuration or methodologies of any of these embodiments. In addition, although the exemplary embodiments are described as embodying several different inventive features, those skilled in the art will appreciate that any one of these features could be implemented without the others in accordance with the invention.

In this disclosure, references to "one embodiment," "an embodiment," "an exemplary embodiment," or "embodiments" mean that the feature or features being described are included in at least one embodiment of the invention. Separate references to "one embodiment," "an embodiment," "an exemplary embodiment," or "embodiments" in this description do not necessarily refer to the same embodiment and are also not mutually exclusive unless so stated and/or except as will be readily apparent to those skilled in the art from the description. For example, a feature, structure, function, etc. described in one embodiment may also be included in other embodiments, but is not necessarily included. Thus, the present invention can include a variety of combinations and/or integrations of the embodiments described herein.

As used herein, the term "cannabis" refers to a genus of flowering plant in the family Cannabaceae. The number of species within the genus is disputed. Three species may be recognized, *Cannabis sativa, Cannabis indica* and *Cannabis ruderalis. C. ruderalis* may be included within *C*. sativa; or all three may be treated as subspecies of a single species, *C*. *sativa.* The genus is indigenous to central Asia and the Indian subcontinent.

Cannabis has long been used for hemp fiber, hemp oils, medicinal purposes, and as a recreational drug. Industrial hemp products are made from cannabis plants selected to produce an abundance of fiber. To satisfy the UN Narcotics Convention, some cannabis strains have been bred to produce minimal levels of tetrahydrocannabinol (THC), the principal psychoactive constituent. Many additional plants have been selectively bred to produce a maximum level of THC. Various compounds, including hashish and hash oil, may be extracted from the plant.

Within naturally occurring and manmade hybrids, cannabis contains a vast array of compounds. Three compound classes are of interest within the context of the present disclosure, although other compounds can be present or added to the compositions to optimize the experience of a given recreational consumer and medical or medicinal patient or patient population. Those classes include cannabinoids, terpenes and flavonoids.

There are many ways of growing cannabis, some of which are natural, and some are carefully designed by humans, and they will not be recited here. However, one of ordinary skill in the art of cannabis production will typically place a cannabis seed or cutting into a growth media such as soil, manufactured soil designed for cannabis growth or one of many hydroponic growth media. The cannabis seed or cutting is then provided with water, light and, optionally, a nutrient supplement. At times, the atmosphere and temperature are manipulated to aid in the growth process. Typically, the humidity, air to carbon dioxide gas ratio and elevated temperature, either by use of a heat source or waste heat produced by artificial light, are used. On many occasions ventilation is carefully controlled to maintain the conditions described above within an optimal range to both increase the rate of growth and, optionally, maximize the plant's production of the compounds, which comprise the compositions of the disclosure. It is possible to control lighting cycles to optimize various growth parameters of the plant.

Given the number of variables and the complex interaction of the variables, it is possible to develop highly specific formulas for production of cannabis which lead to a variety of desired plant characteristics. The present disclosure is applicable to use with such inventive means for growing cannabis as well as any of the variety of conventional methods.

*Cannabis sativa* is an annual herbaceous plant in the Cannabis genus. It is a member of a small, but diverse family of flowering plants of the Cannabaceae family. It has been cultivated throughout recorded history, used as a source of industrial fiber, seed oil, food, recreation, religious and spiritual moods and medicine. Each part of the plant is harvested differently, depending on the purpose of its use. The species was first classified by Carl Linnaeus in 1753.

*Cannabis indica,* formally known as *Cannabis sativa forma indica,* is an annual plant in the Cannabaceae family. A putative species of the genus Cannabis.

*Cannabis ruderalis* is a low-THC species of Cannabis, which is native to Central and Eastern Europe and Russia. It is widely debated as to whether *C*. *ruderalis* is a sub-species of *Cannabis sativa.* Many scholars accept *Cannabis ruderalis* as its own species due to its unique traits and phenotypes that distinguish it from *Cannabis indica* and *Cannabis sativa.*

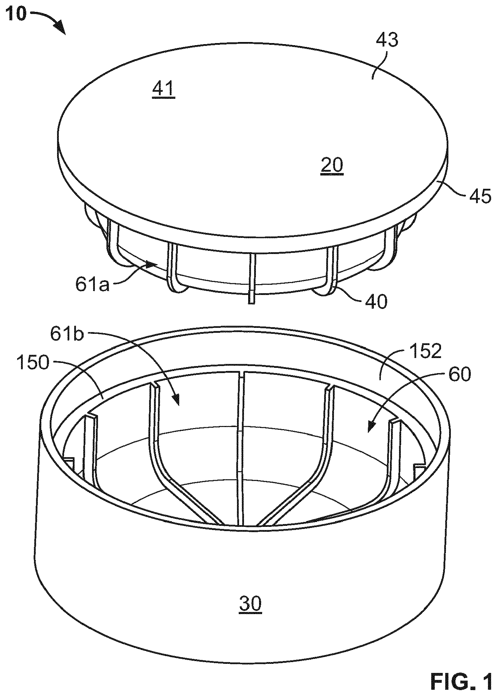

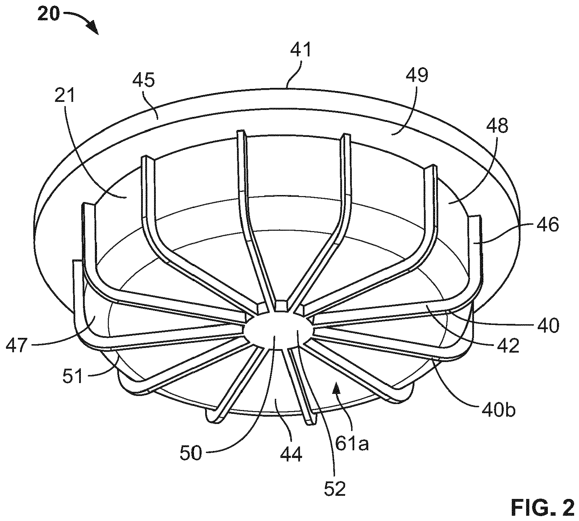

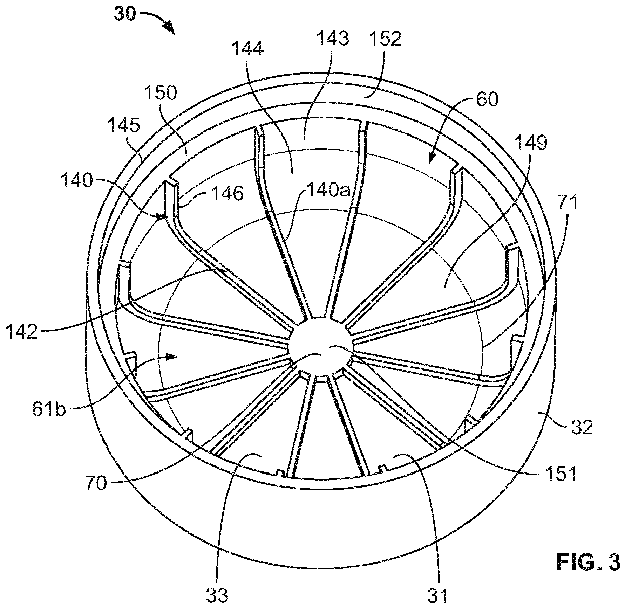

Referring now to FIG. 1, a grinder 10 is shown in accordance with one exemplary embodiment of the invention described herein. Grinder 10 is configured for processing or grinding plant material, e.g., cannabis flowering parts. Grinder 10 includes a lid 20 (also shown in FIG. 2) and a base or container 30 (also shown in FIG. 3).

As shown in FIG. 2, lid 20 includes an upper portion 41 and a protrusion 21 extending downwardly from the upper portion 41. Upper portion 41 is shaped as a round disc and includes a top flat portion 43 (FIG. 1), an edge or side wall 45, and a bottom surface 49. The protrusion 21 includes a lower surface 44 and a side wall 48 extending between the bottom surface 49 of upper portion 41 and the lower surface 44. The transition from lower surface 44 to side wall 48 is formed as a rounded edge 47. The side wall 48 is spaced radially inward from edge 45 such that a portion of bottom surface 49 is exposed. The protrusion 21, including lower surface 44, is configured to be at least partially received within a cavity 60 (FIG. 1) of container 30. The lower surface 44 includes a center portion 50 and a peripheral edge 51 spaced radially outward from the center portion 50. Upper portion 41 may include a handle or other structure (not shown) that may be grasped or pressed by a user for rotating lid 20 relative to container 30. For example, the edge 45 of upper portion 41 may have an outer surface that is configured for grasping by a user.

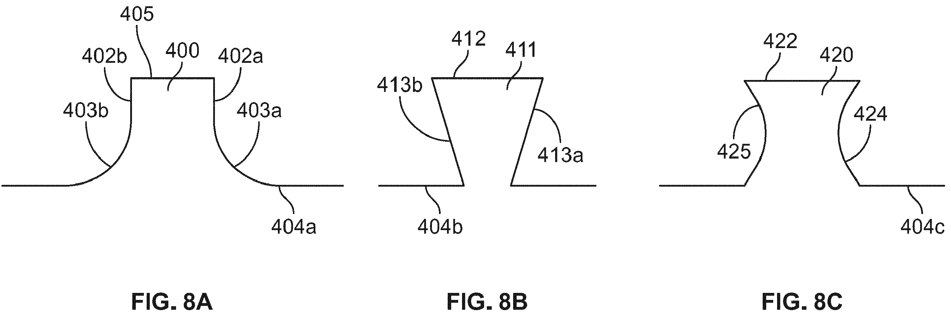

Lid 20 includes a plurality of lid teeth, one of which is identified as 40 in FIG. 2. Lid 20 is shown with twelve teeth 40; however, lid 20 may include any suitable number of teeth. Each of the lid teeth 40 extends outward from lower surface 44, rounded edge 47, and side wall 48. Each of the lid teeth 40 extends in a generally radial and linear manner from adjacent the center portion 50 of lower surface 44 and across the lower surface 44 to the peripheral edge 51. Further, each of the lid teeth 40 extends across the rounded edge 47 and across the side wall 48 to the bottom surface 49 of upper portion 41. Thus, each of the lid teeth 40 extends across the outer surface of protrusion 21 from center portion 50 to upper portion 41. Each of the lid teeth 40 includes a downwardly projecting portion 42 on lower surface 44 and an outwardly projecting portion 46 on side wall 48. The lid teeth 40 are spaced equidistant from each other around a circumference of the protrusion 21 and intersect at a circular hub 52, which extends outward from lower surface 44 at center portion 50. Each of the lid teeth 40 may have one of the cross-sectional profiles shown in FIGS. 8A-C, which cross-section is generally constant across the radial extension of the tooth from center portion 50 to upper portion 41.

Referring to FIG. 3, container 30 has a bottom wall 31 and a side wall 32 extending upward from the bottom wall 31. The bottom wall 31 and side wall 32 form an interior surface 33 that defines cavity 60. The interior surface 33 includes a bottom surface 149, a side surface 143, and a curved surface 144 forming a transition between the bottom surface 149 and side surface 143. The interior surface 33 is generally formed as a concave surface. The interior surface 33 further is configured so that the protrusion 21 of lid 20 may be inserted into the cavity 60. The bottom surface 149 includes a center portion 70 and a peripheral edge 71 spaced radially outward from the center portion 70. The side surface 143 further includes a peripheral edge 145 positioned at an upper end thereof. Side surface 143 includes a shoulder 150 that is positioned to engage or be adjacent bottom surface 49 of lid 20 when protrusion 21 is positioned in cavity 60. Edge 45 of lid 20 may also contact or be adjacent to an upper portion 152 of side surface 143 when the lid 20 is engaged with the container 30.

Container 30 includes a plurality of container teeth, one of which is identified as 140 in FIG. 3. Container 30 is shown with twelve teeth 140; however, container 30 may include any suitable number of teeth. Each of the container teeth 140 extends outward from bottom surface 149, curved surface 144, and side surface 143 into the cavity 60. Each of the container teeth 140 extends in a generally radial and linear manner from adjacent the center portion 70 of bottom surface 149 and across the bottom surface 149 to the peripheral edge 71. Further, each of the container teeth 140 extends across the curved surface 144 and across the side surface 143 to adjacent the peripheral edge 145 of the side surface 143. Thus, each of the container teeth 140 extends across the interior surface 33 from center portion 70 to adjacent peripheral edge 145. Each of the container teeth 140 includes an upwardly projecting portion 142 on bottom surface 149 and an inwardly projecting portion 146 on side surface 143. The container teeth 140 are spaced equidistant from each other around a circumference of the interior surface 33 and intersect at a circular hub 151, which extends outward from bottom surface 149 at center portion 70. Each of the container teeth 140 may have one of the cross-sectional profiles shown in FIGS. 8A-C, which cross-section is generally constant across the radial extension of the tooth from center portion 70 to adjacent peripheral edge 145.

The lid 20 and container 30 may be configured so that when the protrusion 21 of lid 20 is inserted into the cavity 60 of container 30, and the teeth 40 on lid 20 are aligned with the teeth 140 on container 30, the teeth 40 abut or engage the teeth 140. For example, an upper surface 140a of teeth 140 may abut (or be spaced a constant distance from) a lower surface 40b of teeth 40 along the entire radial extension of the teeth 40, 140 from center portion 50, 70 to bottom surface 49 (for teeth 40) and adjacent peripheral edge 145 (for teeth 140. The protrusion 21 of lid 20 is shaped to conform to the shape of the interior surface 33 of container 30, i.e., the protrusion 21 has a convex shape that matches the concave shape of interior surface 33. The complementary shaped protrusion 21 and interior surface 33 allow the teeth 40 and 140 to grind the cannabis flowering parts and may significantly reduce spillage of cannabis flower when removing the lid 20 after use. Further, the complementary shapes allow the user to compress the flowering parts held in the container 30 via a "mashing" action to complement a rotating or twisting movement between lid 20 and container 30. In addition, as described in more detail below, spacers may be used with grinder 10 to space teeth 40 a desired distance from teeth 140.

A magnet (not shown) may be located at center portion 50 of lid 20. A second magnet (not shown) may be located at a center portion 70 of container 30 (FIG. 3) for attracting the magnet of lid 20 to releasably connect lid 20 and container 30 when lower surface 44 of lid 20 is received in cavity 60 (FIG. 1) of container 30. Alternatively, a magnet may be located on one of lid 20 and container 30 while the other of lid 20 and container 30 includes a ferromagnetic material that is positioned to attract the magnet for releasably connecting lid 20 and container 30.

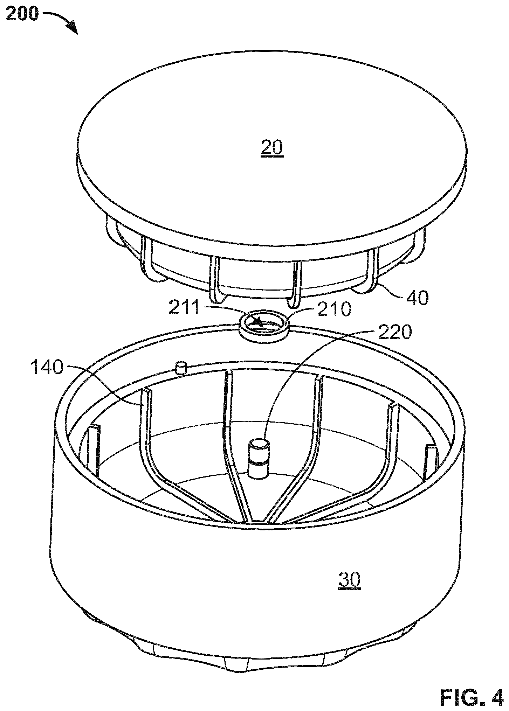

FIG. 4 shows another exemplary embodiment of grinder 200, which is substantially similar to grinder 10. Accordingly, only the differences between grinder 200 and grinder 10 are described in detail herein. Grinder 200 includes a spacer 210 that may be positioned between the lid 20 and container 30 to adjust the spacing between teeth 40 and teeth 140. Spacer 210 may be located between center portion 50 and center portion 70 to adjust a granular size of the cannabis flowering parts ground in container 30. The grinder 200 may include a plurality of spacers 210 each having a different thickness so that a user may choose which spacer to use depending on a desired granular size of the ground cannabis flowering parts. Spacer 210 may also include a magnet or be formed of a ferromagnetic material to aid in maintaining the position of spacer 210 between a magnetic center portion 50 and/or a magnetic center portion 70.

Grinder 200 further includes a pin 220, which may be releasably connected to center portion 50 and/or center portion 70. For example, the pin 220 may include a magnet or be formed of a ferromagnetic material that releasably engages a magnet or ferromagnetic material of center portion 50 and/or center portion 70. The pin 220 may alternatively be integrally formed with, or permanently connected to, center portion 50 and/or center portion 70. The pin 220 may extend outward from center portion 50 and be received within a recess formed in center portion 70, or alternatively, the pin 220 may extend outward from center portion 70 and be received within a recess formed in center portion 50. By being received within a recess formed within one of center portions 50, 70, the pin 220 may align central axes of the lid 20 and container 30 during rotation. By maintaining a desired alignment between the lid 20 and container 30, the pin 220 may further reduce a contact surface area between the lid 20 and container 30 to reduce wear on the teeth 40, 140 for optimal long term use and reduced maintenance. Use of the pin 220 may also inhibit "sticking" (i.e., friction due to residue) between the lid 20 and container 30 due to compressed cannabis flower crystal over time. Any such reduction in friction also facilitates the rotation or twisting of the lid 20 and container 30 to grind flowering parts held in container 30 while allowing the stems to be trapped between the teeth 40, 140 and the flowering parts to be received in spaces 61a-b (FIG. 1) between the teeth. Pin 220 may further be formed of one or more parts.

Spacer 210 includes an opening 211 that may receive the pin 220 to position the spacer 210 relative to the lid 20 and container 30. Such engagement of spacer 210 with pin 220 may restrain spacer 210 during rotation or twisting of lid 20 relative to container 30 by a user while pin 220 is magnetically connected to center portion 50 and/or center portion 70.

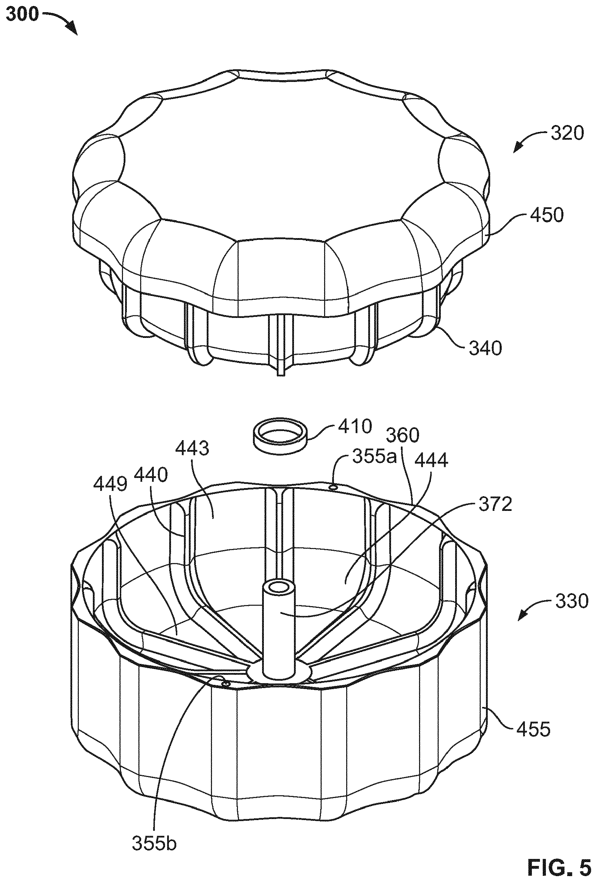

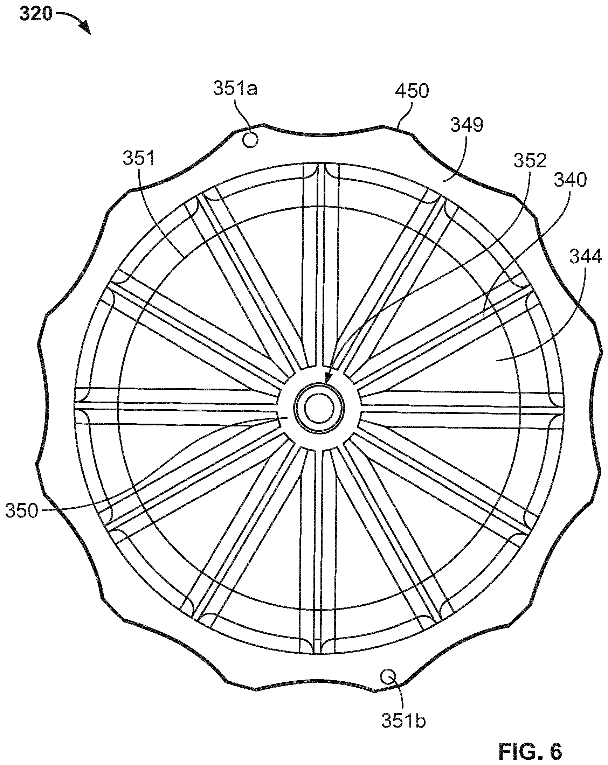

FIGS. 5-7 show another exemplary embodiment of grinder 300 that is substantially similar to grinder 10. Accordingly, only the differences between grinder 300 and grinder 10 are described in detail herein. Grinder 300 includes a lid 320 similar to lid 20 and a container 330 similar to container 30. Lid 320 includes teeth 340 similar to teeth 40 that extend outward from a lower surface 344 (FIG. 6). The teeth 340 further extend in a generally radial and linear manner from adjacent a center portion 350 of lower surface 344 to a peripheral edge 351 of lower surface 344. Like teeth 40 described above, the teeth 340 further extend across a rounded edge and side wall of the lid 320 to a bottom surface 349. The center portion 350 includes an alignment recess 352 (FIG. 6) for receiving an alignment pin 372 (FIG. 5) of the container 330.

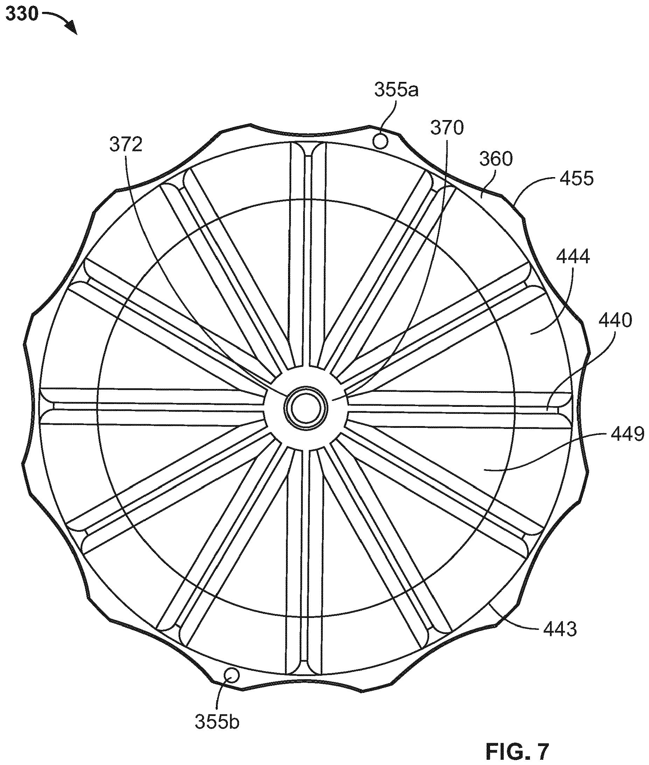

Container 330 includes teeth 440 similar to teeth 140 of container 30. The teeth 440 extend outward from a bottom surface 449, a side surface 443 and a curved surface 444. The teeth 440 extend in a generally radial and linear manner from adjacent a center portion 370 (FIG. 7) across the bottom surface 449, curved surface 444, and side surface 443 in a similar manner as described above with respect to teeth 140 of container 30. Center portion 370 includes alignment pin 372, which is configured (e.g., shaped and dimensioned) to be received in recess 352 such that lid 320 and container 330 may be aligned relative to each other when a portion of the lid 320 is inserted into the cavity defined by container 330. An axis of the alignment pin 372 may be about coaxial with a central axis of the lid 320 and container 330. As described above with respect to grinder 200, use of the alignment pin 372 to maintain a desired alignment between the lid 320 and container 330 may reduce wear on the teeth 340, 440 for optimal long term use and reduced maintenance, and inhibit friction between the lid 320 and container 330 to facilitate rotation of the lid 320. Like with grinder 10, the protrusion of lid 320 conforms to the shape of the interior surface of container 330, which reduces spillage of cannabis flower when removing the lid 320 after use and allows a user to compress the flowering parts held in the container 330 with a mashing action.

One of center portion 350 and center portion 370 may include a magnet that is configured to attract a magnet or ferromagnetic material on the other of center portion 350 and center portion 370 for releasably connecting lid 320 and container 330. A spacer 410 (FIG. 5) may be positioned between the lid 320 and container 330 with an opening through the spacer 410 receiving alignment pin 372. Such engagement of spacer 410 with pin 372 may restrain spacer 410 during rotation or twisting of lid 320 relative to container 330 by a user while pin 372 is received in recess 352. The spacer 410 may space the teeth 340 on lid 320 a desired distance from the teeth 440 on container 330 in a similar manner as described above with respect to grinder 200.

Lid 320 includes a plurality of ribs 450 around a circumference thereof to facilitate gripping the lid 320 by a user. Container 330 further includes a plurality of ribs 455 around an outer circumference thereof to facilitate gripping the container 330. A bottom surface 349 of lid 320 includes magnets 351a-b (FIG. 6) that are engageable with magnets 355a-b (FIG. 7) on a top surface 360 of container 330 to releasably connect such magnets 351a-b, 355a-b. The magnets 351a-b, 355a-b may be used to align ribs 450 of lid 320 with ribs 455 of container 330 and/or place teeth 340 in a desired position relative to teeth 440. In another example, one of bottom surface 349 of lid 320 and top surface 360 of container 330 may include magnets while the other includes ferromagnetic material that is positioned to attract the magnets for aligning ribs 450, 455 and/or teeth 340, 440. The magnets 351a-b, 355a-b may be used to prevent free rotation of the lid 320 relative to container 330 when the grinder 300 is not in use. This reduces undesired surface wear on the teeth 340, 440 increasing the longevity of the grinder 300. As an alternative to magnets, the lid 320 and container 330 may include mating mechanical fasteners, e.g., clips, to prevent undesired rotation of lid 320 relative to container 330. Grinders 10 and 200 described above may also include magnets or mechanical fasteners to prevent undesired rotation of lid 20 relative to container 30.

The lids 20, 320 and containers 30, 330 may be formed from any suitable material. For example, the lids (e.g., lids 20, 320) and containers (e.g., containers 30, 330) described above may be formed of PLA, ABS, polycarbonate, plastic, ceramic and any food-grade non-toxic metal, wood or other material rigid enough to allow the functions described.

FIGS. 8A-C show exemplary cross-sectional shapes of teeth that may be used for any of the teeth 40, 140, 340, and 440 of the grinders 10, 200, and 300 described above. The surfaces 404a-c shown in FIGS. 8A-C may be any of the surfaces of grinders 10, 200, and 300 from which teeth 40, 140, 340, and 440 extend.

Referring to FIG. 8A, an exemplary tooth 400 has a pair of side surfaces 402a-b that extend outward from a surface 404a. The side surfaces 402a-b are generally perpendicular to surface 404a and curved surfaces 403a-b are positioned between the side surfaces 402a-b and surface 404a. A top surface 405 extends between the side surfaces 402a-b. Top surface 405 is generally parallel to, and spaced apart from, surface 404a.

Another exemplary tooth 411, shown in FIG. 8B has side walls 413a-b that extend outward from surface 404b at an angle to form an acute angle between each of the side walls 413a-b and surface 404b. A top surface 412 extends between the side walls 413a-b. Top surface 412 is generally parallel to, and spaced apart from, surface 404b.

FIG. 8C shows another exemplary tooth 420, which has side walls 424 and 425 that extend outward from surface 404c. Side walls 424 and 425 are concave such that lower and upper portions of the side walls 424, 425 are spaced farther apart from each other than middle portions of the side walls 424, 425. A top surface 422 extends between the side walls 424, 425. Top surface 422 is generally parallel to, and spaced apart from, surface 404c. Tooth 411 and tooth 420 may be more adapted than tooth 400 to shearing a stem from a flowering portion of a cannabis plant part due to a sharper angle between a top portion (e.g., top surfaces 412, 422) and a side portion (e.g., angled sides 413a-b, concave side walls 424, 425) thereof.

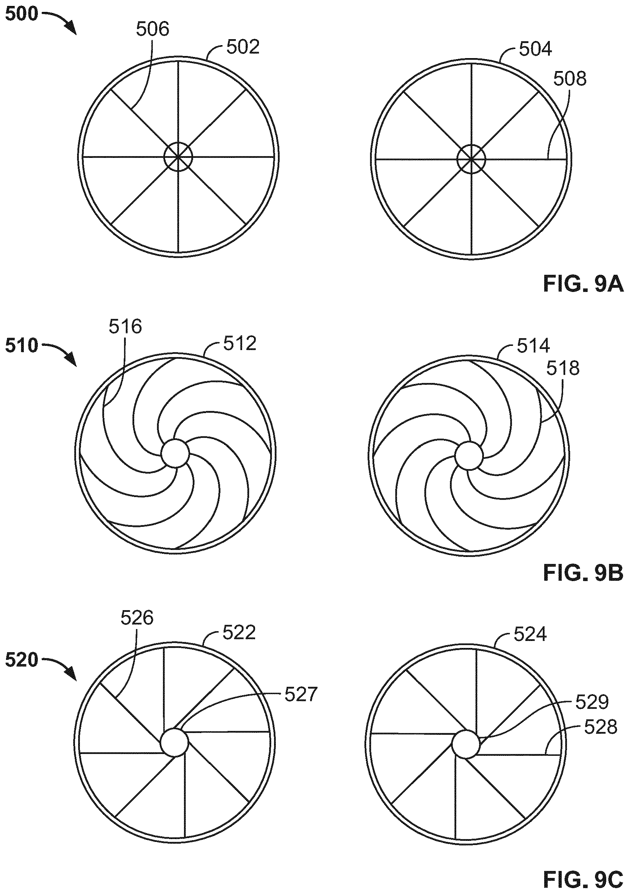

The teeth (e.g., teeth 40, 140, 340, 440) depicted in FIGS. 1-7 extend radially outward from a center portion (e.g., center portions 50, 70, 350, 370) of the lids (e.g., lids 20, 320) and containers (e.g., containers 30, 330). The teeth may be circumferentially spaced so that the teeth of the lid may be aligned with the teeth on the corresponding container. The teeth on the lids and containers may also be circumferentially spaced a same number of degrees to allow such alignment. In other examples, such teeth on the lids and containers may differ in number, circumferential spacing, and pattern. For example, FIGS. 9A-9C, described below, show exemplary teeth patterns that may be used with any of the grinders 10, 200, and 300 described herein.

FIG. 9A shows a grinder 500 with a lid 502 and container 504. The lid 502 has eight teeth 506 that are equally spaced circumferentially. The container 504 also has eight teeth 508 that are equally spaced circumferentially. The teeth 506 and 508 each extend radially outward from a center to a peripheral edge of the respective lid 502 and container 504.

FIG. 9B shows a grinder 510 with a lid 512 and container 514. The lid 512 includes eight teeth 516 that extend in a generally curvilinear manner, or spiral shape, from adjacent a center portion of the lid to adjacent a peripheral edge of the lid. The container 514 also includes eight teeth 518 that extend in a generally curvilinear manner, or spiral shape, from adjacent a center portion of the container to adjacent a peripheral edge of the container.

FIG. 9C shows a grinder 520 with a lid 522 and container 524. The lid 522 includes eight teeth 526 that extend outward in a generally linear manner from adjacent a center of the lid 522 to adjacent a peripheral edge of the lid 522. The teeth 526 are offset from a central axis of the lid 522 such that they extend outward tangentially from a round hub 527 that is aligned with a central axis of the lid 522. The container 524 further includes eight teeth 528 that extend outward tangentially from a round hub 529 in a similar manner as the teeth 526 on lid 522.

To use grinder 10, a user may deposit plant material, e.g., cannabis plant parts, including stems connected to flowering parts, in cavity 60. The protrusion 21 of lid 20 is inserted into the cavity 60 to engage lid 20 with container 30. Lid 20 is rotated or twisted relative to container 30 to cause rotation of teeth 40 relative to teeth 140. Alternatively, the user may twist container 30 relative to lid 20, or twist both container 30 and lid 20 in opposite directions. Teeth 40 and teeth 140 may be configured (e.g., sized, shaped and dimensioned) such that the teeth 40 on lid 20 engage the teeth 140 on container 30 with the plant material therebetween as lid 20 is rotated relative to container 30. As the teeth 40, 140 engage and move past each other, they separate stems of the plant material from flowering parts of the plant material. The teeth 40, 140 further grind the flowering parts of the plant material to reduce their size. The user may apply pressure to the lid 20 during rotation of the lid 20 to compress the plant material in the cavity 60 and facilitate the grinding and removal of the stems from the flowering parts. The flowering parts may be received in spaces 61a-b between teeth 40 and/or teeth 140 while the stems may remain between teeth 40 and teeth 140. The grinder 10 thus separates the stems from the flowering parts during rotation of the lid 20 relative to the container 30. When the desired amount of grinding is complete, the lid 20 may be separated from the container 30. The stems may then be removed from between the teeth 40, 140 (i.e., the stems may lie across adjacent teeth 40 or adjacent teeth 140) while the cannabis flower contents may be removed from spaces 61b separate from the stems.

Grinders 200 and 300 are used in a similar manner as grinder 10, except that the user may select a spacer 210, 410 to space the teeth 40, 340 of the lid 20, 320 from the teeth 140, 440 of the container 30, 330 by a desired amount. As described above, the grinders 200 and 300 may come with different sizes of spacers 210, 410 so that the user may select a desired spacing between the teeth of the lid and the teeth of the container, which corresponds with a desired size of the plant material after grinding. The spacers 210, 410 may be configured to provide a gap between the teeth (e.g., between teeth 40 and 140 or between teeth 340 and 440) of between approximately 0.2 to 5 mm when the spacers 210, 410 are positioned between and abut the lid 20, 320 and container 30, 330.

After use as described above, including depositing flowering parts and stems in the container and a rotation of lid (e.g., lid 20, 320) and container (e.g., container 30, 330) relative to each other, such sheared stems and ground up flowering parts may be removed (e.g., via gravity feeding) and maintenance and cleaning of the inside surfaces may be done with a makeup or small paint brush, for example.

While several aspects of the invention have been described and depicted herein, alternative aspects may be effected by those skilled in the art to accomplish the same objectives. Accordingly, it is intended to cover all such alternative aspects as fall within the true spirit and scope of the invention. For example, the teeth (e.g., teeth 40, 140, 340, 440) may be configured (e.g., shaped and dimensioned) in various ways to separate the stem and flowering parts, and/or to promote grinding of the flowering parts received in the containers (e.g., containers 30, 330). For example, the lids (e.g., lids 20, 320) and containers (e.g., containers 30, 330) described could include various configurations having different numbers of teeth, such as 8 and 12 teeth each. Other examples could include variations such as 1, 2-4, 5-7, 8-10, 11-13, 14-16, 17-19, 20-22, 23-25, 26-28, 29-31, 32-34 or 35-37 teeth on corresponding lids and containers. Further, for any of the grinders described above, the teeth on the lid may be of a different size than the teeth on the container, and/or the teeth on the lid may be oriented in a different pattern than the teeth on the container.

Further, while the teeth 40, 340 on lids 20, 320 are shown as extending across the lower surface 44, 344, rounded edge 47, and side wall 48, it is within the scope of the invention for the teeth 40, 340 to just extend from adjacent the center portion 50, 350 of the lower surface 44, 344 to adjacent the peripheral edge 51, 351 of the lower surface 44, 344. Likewise, the teeth 140, 440 on containers 30, 330 may just extend from adjacent the center portion 70, 370 of the bottom surface 149, 449 to adjacent the peripheral edge 71 of the bottom surface 149, 449 and not extend up the curved surface 144, 444 and side surface 143, 443.

From the foregoing it will be seen that this invention is one well adapted to attain all ends and objectives herein-above set forth, together with the other advantages which are obvious and which are inherent to the invention.

Since many possible embodiments may be made of the invention without departing from the scope thereof, it is to be understood that all matters herein set forth or shown in the accompanying drawings are to be interpreted as illustrative, and not in a limiting sense.

While specific embodiments have been shown and discussed, various modifications may of course be made, and the invention is not limited to the specific forms or arrangement of parts and steps described herein, except insofar as such limitations are included in the following claims. Further, it will be understood that certain features and subcombinations are of utility and may be employed without reference to other features and subcombinations. This is contemplated by and is within the scope of the claims.

## Claims

1. A grinder comprising:
a container comprising at least one interior surface defining a cavity, the container further comprising at least one container tooth that extends outward from the at least one interior surface into the cavity, wherein the at least one container tooth extends across at least a portion of the at least one interior surface from adjacent a center portion of the at least one interior surface to adjacent a peripheral edge of the at least one interior surface; and
a lid comprising a lower surface that is configured to be at least partially received within the cavity, wherein the lid comprises at least one lid tooth that extends outward from the lower surface, wherein the at least one lid tooth extends across at least a portion of the lower surface from adjacent a center portion of the lower surface to adjacent a peripheral edge of the lower surface.

2. The grinder of claim 1,
wherein the at least one interior surface includes a concave surface.

3. The grinder of claim 1 or claim 2,
wherein the at least one interior surface includes a bottom surface and a side surface, wherein a center portion of the bottom surface comprises the center portion of the at least one interior surface, and wherein a peripheral edge of the side surface comprises the peripheral edge of the at least one interior surface.

4. The grinder of claim 3,
wherein the at least one interior surface includes a curved surface positioned between the bottom surface and the side surface.

5. The grinder of claim 4,
wherein the at least one container tooth extends across the bottom surface from the center portion of the bottom surface to the curved surface, wherein the at least one container tooth further extends across the curved surface to the side surface and across the side surface to the peripheral edge of the side surface.

6. The grinder of any one of the preceding claims,
wherein the at least one container tooth comprises a plurality of container teeth each extending outward from the at least one interior surface into the cavity, wherein each of the container teeth extends across at least a portion of the at least one interior surface from adjacent the center portion of the at least one interior surface to adjacent the peripheral edge of the at least one interior surface.

7. The grinder of claim 6,
wherein each of the container teeth extends in a generally linear manner from adjacent the center portion of the at least one interior surface to adjacent the peripheral edge of the at least one interior surface.

8. The grinder of claim 7,
wherein each of the container teeth extends radially from adjacent the center portion of the at least one interior surface to adjacent the peripheral edge of the at least one interior surface or
wherein each of the container teeth extends in a generally curvilinear manner from adjacent the center portion of the at least one interior surface to adjacent the peripheral edge of the at least one interior surface.

9. The grinder of any one of the preceding claims,
wherein the lid comprises an upper portion and a protrusion extending downwardly from the upper portion, wherein the protrusion includes the lower surface, wherein the protrusion is configured to be at least partially received within the cavity.

10. The grinder of claim 9,
wherein the protrusion includes at least one side wall extending between the upper portion and the lower surface and
wherein preferably the at least one lid tooth extends from the peripheral edge of the lower surface across at least a portion of the side wall.

11. The grinder of claim 9,
wherein the upper portion has an outer surface that is configured for grasping by a user.

12. The grinder of any one of the preceding claims,
wherein the at least one lid tooth comprises a plurality of lid teeth each extending outward from the lower surface, wherein each of the lid teeth extends across at least a portion of the lower surface from adjacent a center portion of the lower surface to adjacent a peripheral edge of the lower surface.

13. The grinder of any one of the preceding claims,
further comprising a pin that extends outward from one of the at least one interior surface of the container and the lower surface of the lid, wherein the pin is configured to be received by a recess formed in the other of the at least one interior surface of the container and the lower surface of the lid, and
preferably further comprising a spacer with an opening that is configured to receive the pin.

14. The grinder of any one of the preceding claims,
further comprising a magnet positioned on one of the lid and the container, the magnet configured for engaging another magnet or a ferromagnetic material on the other of the lid and the container.

15. The grinder of any one of the preceding claims,
wherein the at least one container tooth comprises a pair of side surfaces each extending outward from the at least one interior surface, and wherein the at least one container tooth comprises a top surface that extends between the side surfaces, the top surface being spaced apart from the at least one interior surface.
